# EUROPÄISCHE PATENTSCHRIFT

(11) **EP 3 571 121 B1**
(45) Veröffentlichungstag und Bekanntmachung des Hinweises auf die Patenterteilung: **02.08.2023**
(21) Anmeldenummer: 17829971.5
(22) Anmeldetag: 21.12.2017
(51) Int. Cl.: B64D 13/06, G01D 21/00

(54) **VERFAHREN UND VORRICHTUNG ZUR ÜBERWACHUNG VON UMGEBUNGSBEDINGUNGEN INNERHALB EINES TRANSPORTMITTELS**
METHOD AND DEVICE FOR MONITORING ENVIRONMENTAL CONDITIONS WITHIN A MEANS OF TRANSPORT
PROCÉDÉ ET DISPOSITIF DE SURVEILLANCE DES CONDITIONS AMBIANTES À L'INTÉRIEUR D'UN MOYEN DE TRANSPORT

(30) Priorität: 19.01.2017 DE 102017101014
(43) Veröffentlichungstag der Anmeldung: 27.11.2019
(73) Patentinhaber: Testo SE & Co. KGaA, 79853 Lenzkirch (DE)
(72) Erfinder: BAEUCHLE, Yannic, 8222 Beringen (CH); STRATMANN, Martin, 79117 Freiburg i.Br. (DE); WEGNER, Matthias, 79199 Kirchzarten (DE); LANGENBACHER, Markus, 79199 Kirchzarten (DE); MERTE, Rolf, 79117 Freiburg (DE); OESTREICHER, Wolfgang, 79104 Freiburg (DE)
(74) Vertreter: Mertzlufft-Paufler, Cornelius
(86) Internationale Anmeldenummer: PCT/EP2017/083999
(87) Internationale Veröffentlichungsnummer: WO 2018/134025

(56) Entgegenhaltungen:
- WO-A1-2016/189421
- US-A1- 2013 030 718
- US-A1- 2016 361 972
- US-B2- 8 200 379

## Beschreibung

Die Erfindung betrifft ein Verfahren zur Überwachung wenigstens einer Umgebungsbedingung innerhalb eines Transportmittels sowie ein Verfahren zur Überwachung der Luftqualität innerhalb eines Flugzeugs.

Die Erfindung betrifft ferner eine Vorrichtung zur Überwachung wenigstens einer Umgebungsbedingung innerhalb eines Transportmittels und die Verwendung einer derartigen Vorrichtung zu einem der zuvor genannten Verfahren.

Beim Transport von Personen oder Waren in Transportmitteln besteht oftmals die Aufgabe, die Umgebungsbedingungen während des Transports, insbesondere innerhalb des Transportmittels, zu überwachen und/oder zu dokumentieren. Derartige Informationen sind für eine Vielzahl von Anwendungen von Interesse, insbesondere dann, wenn die aufgezeichneten Umgebungsbedingungen mit den Transportwegen und damit mit den transportierten Personen oder Waren in Beziehung gesetzt werden sollen.

Als konkretes Anwendungsbeispiel sei der Transport von Passagieren in einem Flugzeug genannt. Hier ist es bekannt, dass in Passagier-Flugzeugen Außenluft zur Belüftung der Kabine direkt an den Triebwerken des Flugzeugs bezogen wird, um für die Passagiere eine Kabinenluft mit geeignetem Druck und geeigneter Temperatur bereitstellen zu können. Problematisch dabei ist, dass bei fehlerhaften Dichtungen am Triebwerk Öl aus diesem verdampfen und somit in die Kabinenluft gelangen kann. Da dem Triebwerksöl häufig flüchtige organische Verbindungen (volatile organic compounds - VOC), insbesondere das giftige Trikresylphosphat (TKP oder englisch: tricresyl phosphate - TCP), beigemischt sind, können auch diese Gase in die Kabine gelangen. In der Folge können diese Substanzen, die durch einfache Filter nicht zurückgehalten werden können, Kopfschmerzen oder andere Krankheitssymptome bei den Passagieren und insbesondere bei den Piloten erzeugen, vor allem wenn diese über längere Zeit den giftigen Gasen ausgesetzt sind.

Es besteht folglich beispielsweise in Passagierflugzeugen ein konkreter Wunsch nach einer Überwachung der Kabinenluft im Hinblick auf das Vorhandensein giftiger Gase wie TKP. Allgemein ist im Transportwesen ein wachsendes Interesse zu beobachten an der Überwachung und insbesondere an der Aufzeichnung und damit Dokumentation von Umgebungsbedingungen in Transportmitteln. Derartige Umgebungsbedingungen können beispielsweise sein, Lufttemperatur, Luftfeuchte, Beschleunigungen, mechanische Schocks, elektromagnetische Strahlung, insbesondere Licht, oder das Vorhandensein von Gasen wie CO2, CO, VOCs, TCP oder Ethylen, um nur einige Beispiele zu nennen. Alle diese Umgebungsbedingungen können einen schädlichen Einfluss auf die transportierten Waren oder Personen haben, weshalb ein Bedürfnis besteht, zumindest Daten zu diesen Umgebungsbedingungen zu sammeln und mit den Verkehrswegen und Transportgütern zu verknüpfen.

Aus der WO 2016/189421 A1 ist ein Verfahren zur Überwachung und Regelung der Kabinenluft eines Flugzeugs bekannt. Dabei wird die Kabinenluft in Abhängigkeit der aktuellen Flughöhe geregelt.

Aus der US 8,200,379 B2 ist ein System zur Behandlung von Notfallsituationen in Flugzeugen, die während dem Flug auftreten, beschrieben. Dieses System umfasst Umgebungssensoren, aus deren Werten abgeleitet wird, ob eine Notfallsituation vorliegt.

Aus der US 2013/0030718 A1 ist ein Verfahren zur Überwachung von Luft in einer Flugzeugkabine auf bestimmte Verunreinigungen bekannt.

Der Erfindung liegt daher die Aufgabe zugrunde, eine preiswerte und praktikable Lösung zur Überwachung wenigstens einer Umgebungsbedingung innerhalb eines Transportmittels bereit zu stellen mit der es möglich ist, die während des Transports herrschenden Umgebungsbedingungen zu rekonstruieren.

Zur Lösung dieser Aufgabe sind erfindungsgemäß bei einem Verfahren der eingangs genannten Art die Merkmale von Anspruch 1 vorgesehen.

Durch die erfindungsgemäße Ausgestaltung des Verfahrens gemäß Anspruch 1 wird es möglich, nachzuvollziehen, welchen Bedingungen eine Person oder eine Ware während eines Transports ausgesetzt war.

Gemäß der Erfindung kann die Verknüpfung der Transportdaten mit der erfassten Messgröße hierbei insbesondere so ausgestaltet werden, dass sie nachträglich nicht manipulierbar ist. Dies erhöht die Sicherheit der Dokumentation.

Lediglich als Veranschauungsbeispiele für mögliche Transportdaten seien hier genannt: Frachtweg, Schiffsraumnummer, Container-Nummer, Flugroute, Bahnstrecke, Transport-, Lagerungs- oder Umladestationen, oder dergleichen.

Erfindungsgemäß kann die Aufgabe auch durch weitere vorteilhafte Ausführungen der Unteransprüche gelöst werden.

Die Transportdaten werden automatisch ermittelt und automatisch der erfassten Messgröße zugeordnet.

Denn damit können auch große Datenmengen mit vertretbarem Aufwand erhoben und verwaltet werden, was insbesondere beim Massentransport von Gütern von großem Interesse ist. Zur Verbesserung der Dokumentation der Transportbedingungen sieht die Erfindung vor, dass von der wenigstens einen Messgröße ein zeitlicher Verlauf erfasst wird. Damit lassen sich Rückschlüsse darüber ziehen, wann und wo genau eine bestimmte Änderung einer Umgebungsbedingung stattgefunden hat.

Bei einer wiederum anderen Ausgestaltung der Erfindung kann vorgesehen sein, dass mindestens eine der folgenden Messgrößen erfasst wird: Temperatur, insbesondere Lufttemperatur; Feuchte, insbesondere Luftfeuchte; Beschleunigung, insbesondere mechanischer Schock; elektromagnetische Strahlung, insbesondere Licht; Gas, insbesondere CO2, CO, VOCs, TCP oder Ethylen.

Es versteht sich, dass es zur Erfassung einer Messgröße ausreichend sein kann, eine von der Messgröße abhängige spezielle Größe zu messen, beispielsweise einen temperaturabhängigen Widerstand in Q, um eine eigentliche Messgröße, beispielsweise Lufttemperatur in °C, indirekt zu bestimmen. In analoger Weise kann auf das Vorhandensein eines Gases geschlossen werden und zwar durch Messen spezieller Größen wie beispielsweise der Leitfähigkeit einer gasempfindlichen Sensorschicht. Diese konkreten Ausgestaltungen der Erfindung ermöglichen eine spezifische Ausrichtung des Verfahrens je nach den Anforderungen der Transportmittel-Überwachung und somit eine breite Anwendbarkeit.

Gemäß einer weiteren Ausgestaltung der Erfindung kann vorgesehen sein, dass eine Messgröße erfasst wird, die mit dem Bestandteil an Trikresylphosphat (TKP) und/oder dem Bestandteil an einer anderen flüchtigen organischen Verbindung (VOC) korreliert. Als Bestandteil kann hier insbesondere ein Volumenanteil in einer Gasphase oder dergleichen verstanden werden.

Zu der wenigstens einen Messgröße wird eine geografische Transportroute erfasst .

Die Erfassung einer genauen Transportroute und die Verknüpfung der Messgröße, insbesondere eines Messgrößenverlaufs, mit der Transportroute ermöglicht eine lokal hoch aufgelöste Dokumentation der Umgebungsbedingungen während des Transports, sodass möglicherweise schädigende Ereignisse sehr exakt bestimmten Ortspositionen zuordenbar sind.

Gemäß einer weiteren Ausgestaltung der Erfindung ist es zudem von Vorteil, wenn nach dem Transport die Messdaten an einen Messdatenempfänger übermittelt werden. Von Vorteil ist dabei, dass der Messdatenempfänger, insbesondere automatisiert, die während des Transports aufgezeichnete Messgröße oder Messgrößen zur Weiterverarbeitung bereitstellen kann. Insbesondere ein Austausch über Internetverbindungen oder Datenbanken kann somit effizient gewährleistet werden.

Zur Lösung der genannten Aufgabe sind erfindungsgemäß die Merkmale des unabhängigen Verfahrensanspruchs 5 vorgesehen.

Von Vorteil ist hierbei, dass das Auftreten von Kopfschmerzen oder anderen Krankheitssymptomen bei Passagieren oder der Crew des Flugzeugs wirksam vermieden werden kann, indem bei Detektion einer mangelnden Luftqualität angemessene Gegenmaßnahmen eingeleitet werden.

Gemäß der Erfindung kann der Nutzen des Verfahrens nach Anspruch 5 weiter gesteigert werden, indem zu der Messgröße geografische Informationen zu wenigsten einem Abflug- und Ankunftsort erfasst werden. Alternativ oder ergänzend kann vorgesehen sein, dass die Ermittlung der Flugdaten durch Abgleich mit einer Flugplandatenbank erfolgt. Durch diese Ausgestaltungen können, bevorzugt automatisiert, eine große Anzahl an Flügen im Hinblick auf die Qualität der Kabinenluft überwacht und dokumentiert werden, was aktuellen Wünschen in der Luftfahrtindustrie entspricht.

Die Flugdaten können also beispielsweise durch wiederholte Erfassung eines Messorts erfasst werden, zum Beispiel mit Hilfe des Global Positioning System (GPS). Aus an sich bekannten Datenbanken über die Flugrouten der einzelnen Flüge können dann später genaue Flugdaten durch Vergleich mit dem GPS-Pfad ermittelt werden. Alternativ kann auch aus Flugplänen anhand eines mittels GPS erfassten Abflugs- und Ankunftsortes in Verbindung mit der Abflugs- und Ankunftszeit der entsprechende Flug ermittelt werden.

Neben der Möglichkeit Flugdaten manuell zu erfassen sieht eine bevorzugte Ausgestaltung der Erfindung vor, dass die Flugdaten durch das Flugzeug übermittelt werden. Beispielsweise kann das Flugzeug diese Daten an einen externen Datenempfänger übertragen, welcher die Daten zur Verknüpfung mit den während des Fluges gesammelten Messdaten zur Qualität der Kabinenluft bereitstellt. Alternativ können die Flugdaten gemäß der Erfindung auch aus Informationen, die das Flugzeug an die Messvorrichtung überträgt, ermittelt werden. Eine solche Übertragung von Flugdaten vom Flugzeug an die Messvorrichtung kann beispielsweise mittels im Kabinenraum angebrachter Transponder erfolgen. Somit können also Informationen, die von dem Flugzeug selbst bereitgestellt werden zur Identifikation des Fluges genutzt werden. Beide dieser Ausgestaltungen der Erfindung ermöglichen, dass Flugdaten mit sehr geringem Aufwand und dennoch sicher erfasst werden können.

Analog zu der eingangs erläuterten bevorzugten Ausgestaltung des Verfahrens nach Anspruch 1, kann auch für das Verfahren zur Überwachung der Luftqualität innerhalb eines Flugzeugs vorgesehen sein, dass die Messgröße und die Flugdaten nachträglich nicht änderbar sind. Damit kann eine Manipulation dieser Daten wirksam ausgeschlossen werden. Dies kann insbesondere dann von hohem Interesse sein, wenn Daten beispielsweise als Beweismittel dienen sollen.

Gemäß einer Ausgestaltung der Erfindung ist es besonders günstig, wenn die Flugdaten die Flughöhe und/oder die Flugposition und/oder die Fluggeschwindigkeit umfassen. Denn die Erfindung hat erkannt, dass diese Daten für den Transport von Waren und/oder Personen mittels Flugzeugen von besonderem Interesse sind und genutzt werden können, um gezielt Rückschlüsse auf Änderungen der Umgebungsbedingungen während eines Fluges zu ziehen.

Zur Lösung der genannten Aufgabe sind erfindungsgemäß die Merkmale des unabhängigen Vorrichtungsanspruchs 10 vorgesehen.

Hierbei ist eine derartige erfindungsgemäße Vorrichtung zur Durchführung eines Verfahrens nach einem der Ansprüche 1 bis 9, eingerichtet .

Durch die erfindungsgemäße Zusammenlegung der Messvorrichtung und der Einrichtung zur Ermittlung und Verarbeitung von Transportdaten in einer Vorrichtung wird eine praktikable Lösung bereit gestellt, mit der sich eine Umgebungsbedingung innerhalb eines Transportmittels einfach und preiswert überwachen lässt.

Insbesondere um die Vorteile der zuvor erläuterten Verfahren voll nutzen zu können, sieht eine erfindungsgemäße Weiterbildung der Vorrichtung vor, dass eine Aufzeichnungsvorrichtung zur Aufzeichnung eines zeitlichen Verlaufs der Messgröße vorhanden ist. Die Ermittlung und die Zuordnung der Transportdaten erfolgt automatisch.

Gemäß einer weiteren Ausgestaltung der Erfindung ist es zudem besonders vorteilhaft, wenn die Vorrichtung als tragbares Gerät ausgebildet ist. Insbesondere kann die Vorrichtung hierzu in ein Smartphone oder in eine Armbanduhr integriert oder integrierbar sein, beispielsweise durch Anstecken. Damit ist eine besonders praktikable Ausgestaltung benannt.

Eine weitere, insbesondere für den Betrieb in Flugzeugen bevorzugte Ausgestaltung einer erfindungsgemäßen Vorrichtung sieht vor, dass die Messvorrichtung zur Erfassung von Trikresylphosphat (TKP), Phenylnaphthylaminen, Organo-phosphaten oder anderen flüchtigen organischen Verbindungen (VOCs) ausgebildet ist. Damit wir eine Funktionalität geschaffen, die auf die Anforderungen an die Überwachung der Luftqualität von Flugzeugkabinen maßgeschneidert ist.

Generell wird es gemäß der Erfindung als vorteilhaft angesehen, wenn die Vorrichtung eine Anzeigeeinrichtung aufweist zur Anzeige einer aktuellen Messgröße und/oder zur Anzeige einer aufsummierten Messgröße und/oder zur Anzeige einer Darstellung, die einer bestimmten Messgröße entspricht. Hierdurch lässt sich gewährleisten, dass die Umgebungsbedingung, insbesondere während des Transports, einfach überwacht werden kann.

Zur Lösung der genannten Aufgabe sind ferner die Merkmale des Vorrichtungsanspruchs 15 vorgesehen.

Insbesondere wird somit erfindungsgemäß zur Lösung der Aufgabe bei einer Vorrichtung zur Überwachung der Luftqualität innerhalb eines Flugzeugs vorgeschlagen, dass die Vorrichtung eine Messvorrichtung zur Erfassung wenigstens einer mit dem Bestandteil an Trikresylphosphat (TCP) und/oder dem Bestandteil an einer anderen flüchtigen organischen Verbindung (VOC) korrelierenden Messgröße, eine Aufzeichnungsvorrichtung zur Aufzeichnung der Messgröße und eine Einrichtung zur Ermittlung von Flugdaten sowie zur Zuordnung der Flugdaten zu der Messgröße aufweist.

Durch die Kombination der drei Unter-Vorrichtungen in einer gemeinsamen Vorrichtung wird eine praktikable Lösung bereitgestellt, mit der sich die Kabinenluft eines Flugzeugs einfach und preiswert mit hoher Sicherheit überwachen lässt. Es versteht sich, dass auch diese Vorrichtung als tragbares Gerät ausgestaltet sein kann.

Schließlich sieht die Erfindung zur Lösung der genannten Aufgabe die Verwendung einer wie zuvor erläuterten Vorrichtung zu einem erfindungsgemäßen Verfahren vor. Insbesondere wird somit erfindungsgemäß vorgeschlagen, dass eine erfindungsgemäße Vorrichtung, wie zuvor beschrieben und/oder nach einem der auf eine Vorrichtung gerichteten Ansprüche, bei einem Verfahren, wie zuvor beschrieben und/oder nach einem der auf ein Verfahren gerichteten Ansprüche, verwendet wird.

Die Erfindung wird nun anhand eines Ausführungsbeispiels näher beschrieben, ist aber nicht auf dieses Ausführungsbeispiel beschränkt.

Weitere Ausführungsbeispiele ergeben sich durch Kombination der Merkmale einzelner oder mehrerer Schutzansprüche untereinander und/oder mit einzelnen oder mehreren Merkmalen des jeweiligen Ausführungsbeispiels. Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden.

Es zeigt:

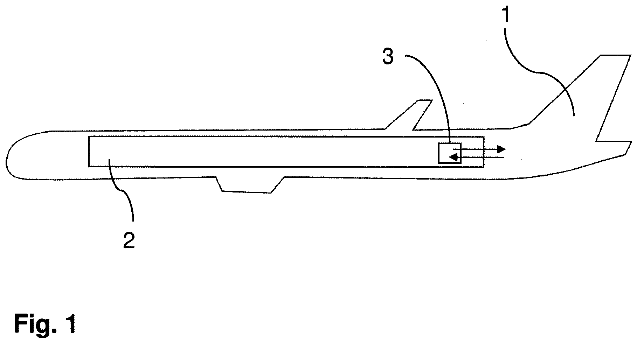

- Fig. 1: eine schematische Darstellung eines Flugzeugs, die eine erfindungsgemäße Vorrichtung als auch die Anwendung eines erfindungsgemäßen Verfahrens veranschaulicht.

Das in Figur 1 illustrierte Beispiel zeigt eine konkrete Anwendung der Erfindung. Die Luftqualität innerhalb des Kabinenraums 2 eines Flugzeugs 1 wird mit einem tragbaren Datenlogger 3 als einer erfindungsgemäßen Vorrichtung 3 überwacht. Hierzu wird während des Flugs der zeitliche Verlauf einer mit dem Bestandteil an TCP korrelierenden Größe mit dem Datenlogger 3 erfasst. Diese korrelierende Messgröße kann beispielsweise die elektrische Leitfähigkeit einer Sensorschicht sein. Parallel dazu werden während des Flugs zugehörige Flugdaten automatisch ermittelt. Hierzu tauscht das Flugzeug mit dem Datenlogger 3 Daten aus, wie durch die beiden Pfeile in Fig.1 angedeutet. Der Datenlogger 3 weist neben einer Messvorrichtung zur Detektion von TCP eine Aufzeichnungsvorrichtung auf, die die Messdaten speichert. Zudem ist der Datenlogger 3 so eingerichtet, dass er automatisch die vom Flugzeug übermittelten Flugdaten mit dem erfassten zeitlichen Verlauf der Messgröße verknüpft. Alle diesen Daten können mittels eines Displays am Datenlogger angezeigt werden. Somit kann beispielsweise die Crew anhand des Displays jederzeit die Qualität der Luft in der Flugzeugkabine überprüfen.

Nach dem Landen des Flugzeugs, können die Daten des Datenloggers von einem Crew-Mitglied beispielsweise über das Internet in eine Datenbank geladen werden, um die Bedingungen während des Fluges zu dokumentieren. Diese Daten können somit nachträglich verwendet werden, um Rückschlüsse auf die bei dem Flug herrschenden Bedingungen ziehen zu können.

Zur sicheren und preiswerten Überwachung von Umgebungsbedingungen während eines Transports werden Vorrichtungen 3 und zugehörige Verfahren vorgeschlagen, mit welchen während des Transports von Gütern oder Personen wenigstens eine Messgröße, vorzugsweise elektronisch, gemessen, ausgewertet und dokumentiert werden kann, wobei die Messgröße einen Rückschluss auf eine Umgebungsbedingung erlaubt und wobei gleichzeitig mindestens eine den Transportraum 2 oder den Transportweg kennzeichnende Information aufgezeichnet und anschließend den aufgezeichneten Messdaten zugeordnet wird. Insbesondere bei automatischer Erfassung der Mess- und Transportdaten lässt sich somit eine lückenlose Überwachung und Dokumentation der Transportbedingungen sicherstellen.

### Bezugszeichenliste

- 1: Flugzeug
- 2: Kabinenraum
- 3: Vorrichtung

## Patentansprüche

1. Verfahren zur Überwachung wenigstens einer Umgebungsbedingung innerhalb eines Transportmittels, wobei mit einer Messvorrichtung während eines Transports wenigstens eine mit einer Umgebungsbedingung korrelierende Messgröße erfasst wird, wobei zugehörige Transportdaten automatisch ermittelt werden, die der erfassten Messgröße automatisch zugeordnet werden und dass zu der Messgröße eine geografische Transportroute und ein zeitlicher Verlauf erfasst wird.

2. Verfahren nach einem der vorhergehenden Ansprüche, **dadurch gekennzeichnet, dass** mindestens eine Messgröße aus Temperatur, Feuchte, Beschleunigung, Schock, Licht, Gas erfasst wird.

3. Verfahren nach einem der vorhergehenden Ansprüche, **dadurch gekennzeichnet, dass** eine mit dem Bestandteil an Trikresylphosphat (TKP) und/oder dem Bestandteil an einer anderen flüchtigen organischen Verbindung (VOC) korrelierende Messgröße erfasst wird.

4. Verfahren nach einem der vorhergehenden Ansprüche, **dadurch gekennzeichnet, dass** nach dem Transport die Messdaten an einen Messdatenempfänger übermittelt werden.

5. Verfahren zur Überwachung der Luftqualität innerhalb eines Flugzeugs (1), insbesondere nach einem der vorhergehenden Ansprüche, wobei mit einer Messvorrichtung (3) während eines Flugs wenigstens eine Messgröße erfasst wird,
wobei zugehörige Flugdaten automatisch ermittelt werden, die der erfassten Messgröße automatisch zugeordnet werden und dass zu der Messgröße geografische Informationen zu wenigsten einem Abflug- und Ankunftsort und ein zeitlicher Verlauf erfasst werden.

6. Verfahren nach Anspruch 5, **dadurch gekennzeichnet, dass** die Ermittlung der Flugdaten durch Abgleich mit einer Flugplandatenbank erfolgt.

7. Verfahren nach einem der Ansprüche 5 oder 6, **dadurch gekennzeichnet, dass** die Flugdaten durch das Flugzeug (1) übermittelt werden, oder aus Informationen, die das Flugzeug (1) an die Messvorrichtung (3) überträgt, ermittelt werden.

8. Verfahren nach einem der Ansprüche 5 bis 7, **dadurch gekennzeichnet, dass** die Messgröße und die Flugdaten nachträglich nicht änderbar sind.

9. Verfahren nach einem der Ansprüche 5 bis 8, **dadurch gekennzeichnet, dass** die Flugdaten die Flughöhe, die Flugposition und/oder die Fluggeschwindigkeit umfassen.

10. Vorrichtung (3) zur Überwachung wenigstens einer Umgebungsbedingung innerhalb eines Transportmittels (1), aufweisend eine Messvorrichtung zur automatischen Erfassung wenigstens einer mit der Umgebungsbedingung korrelierenden Messgröße, eine Einrichtung zur automatischen Ermittlung von Transportdaten und zur automatischen Zuordnung der Transportdaten zu der Messgröße, zur Durchführung des Verfahrens nach einem der Ansprüche 1 bis 9.

11. Vorrichtung (3) nach Anspruch 10, **dadurch gekennzeichnet, dass** eine Aufzeichnungsvorrichtung zur Aufzeichnung eines zeitlichen Verlaufs der Messgröße vorhanden ist.

12. Vorrichtung (3) nach Anspruch 10 oder 11, **dadurch gekennzeichnet, dass** die Vorrichtung als tragbares Gerät ausgebildet ist und/oder in ein Smartphone oder in eine Armbanduhr integriert oder integrierbar, beispielsweise durch Anstecken, ist.

13. Vorrichtung (3) nach einem der Ansprüche 10 bis 12, **dadurch gekennzeichnet, dass** die Messvorrichtung zur Erfassung von Trikresyl-Phosphat, Phenyl-Naphthylaminen, Organo-Phosphaten oder anderen flüchtigen organischen Verbindungen (VOC) ausgebildet ist.

14. Vorrichtung (3) nach einem der Ansprüche 10 bis 13, **dadurch gekennzeichnet, dass** die Vorrichtung (3) eine Anzeigeeinrichtung aufweist zur Anzeige einer aktuellen Messgröße und/oder zur Anzeige einer aufsummierten Messgröße und/oder zur Anzeige einer Darstellung, die einer bestimmten Messgröße entspricht.

15. Vorrichtung (3), nach einem der Ansprüchen 10 bis 14, zur Überwachung der Luftqualität innerhalb eines Flugzeugs (1), aufweisend eine Messvorrichtung zur Erfassung wenigstens einer mit dem Bestandteil an Trikresyl-Phosphat (TKP) und/oder dem Bestandteil an einer anderen flüchtigen organischen Verbindung (VOC) korrelierenden Messgröße, eine Aufzeichnungsvorrichtung zur Aufzeichnung der Messgröße, eine Einrichtung zur Ermittlung von Flugdaten und zur Zuordnung der Flugdaten zu der Messgröße.

16. Verwendung einer Vorrichtung nach einem der Ansprüche 10 bis 15 zu einem Verfahren nach einem der Ansprüche 1 bis 9.

## Claims

1. Method for monitoring at least one ambient condition inside a means of transport, wherein a measuring device is used during transportation to acquire at least one measured variable correlated with an ambient condition, wherein associated transport data are determined automatically, which associated transport data are assigned automatically to the acquired measured variable and a geographical transport route and a temporal profile are acquired in relation to the measured variable.

2. Method according to one of the preceding claims, **characterized in that** at least one measured variable from temperature, humidity, acceleration, jolting, light and gas is acquired.

3. Method according to either of the preceding claims, **characterized in that** a measured variable correlated with the amount of tricresyl phosphate (TCP) and/or the amount of another volatile organic compound (VOC) is acquired.

4. Method according to one of the preceding claims, **characterized in that**, following the transportation, the measured data are transmitted to a measured data receiver.

5. Method for monitoring air quality inside an aircraft (1), in particular according to one of the preceding claims, wherein a measuring device (3) is used during a flight to acquire at least one measured variable, wherein associated flight data are determined automatically, which associated flight data are assigned automatically to the acquired measured variable, and geographical information in relation to at least one departure and arrival location and a temporal profile are acquired in relation to the measured variable.

6. Method according to Claim 5, **characterized in that** the flight data are determined through comparison with a flight plan database.

7. Method according to either of Claims 5 and 6, **characterized in that** the flight data are transmitted by the aircraft (1) or are determined from information that the aircraft (1) transmits to the measuring device (3).

8. Method according to one of Claims 5 to 7, **characterized in that** the measured variable and the flight data are not able to be changed retrospectively.

9. Method according to one of Claims 5 to 8, **characterized in that** the flight data comprise altitude, flight position and/or airspeed.

10. Device (3) for monitoring at least one ambient condition inside a means of transport (1), having a measuring device for automatically acquiring at least one measured variable correlated with the ambient condition, an apparatus for automatically determining transport data and for automatically assigning the transport data to the measured variable, for performing the method according to one of Claims 1 to 9.

11. Device (3) according to Claim 10, **characterized in that** there is a recording device for recording a temporal profile of the measured variable.

12. Device (3) according to Claim 10 or 11, **characterized in that** the device is designed as a portable appliance and/or is integrated or able to be integrated into a smartphone or into a wristwatch, for example by being plugged in.

13. Device (3) according to one of Claims 10 to 12, **characterized in that** the measuring device is designed to detect tricresyl phosphate, phenyl naphthylamines, organophosphates or other volatile organic compounds (VOC).

14. Device (3) according to one of Claims 10 to 13, **characterized in that** the device (3) has a display apparatus for displaying a current measured variable and/or for displaying a summed measured variable and/or for displaying a depiction that corresponds to a specific measured variable.

15. Device (3) according to one of Claims 10 to 14, for monitoring air quality inside an aircraft (1), having a measuring device for detecting at least one measured variable correlated with the amount of tricresyl phosphate (TCP) and/or the amount of another volatile organic compound (VOC), a recording device for recording the measured variable, an apparatus for determining flight data and for assigning the flight data to the measured variable.

16. Use of a device according to one of Claims 10 to 15 for a method according to one of Claims 1 to 9.

## Revendications

1. Procédé de surveillance d'au moins une condition ambiante à l'intérieur d'un moyen de transport, selon lequel au moins une grandeur de mesure corrélée avec une condition ambiante est collectée avec un dispositif de mesure pendant un transport, selon lequel des données de transport connexes qui sont associées automatiquement à la grandeur de mesure collectée sont déterminées automatiquement et qu'un itinéraire de transport géographique et une évolution temporelle sont collectés pour la grandeur de mesure.

2. Procédé selon une des revendications précédentes, **caractérisé en ce qu'**au moins une grandeur de mesure de température, d'humidité, d'accélération, de choc, de lumière ou de gaz est collectée.

3. Procédé selon une des revendications précédentes, **caractérisé en ce qu'**une grandeur de mesure corrélée avec la teneur en phosphate de tricrésyle (TCP) et/ou la teneur en un autre composé organique volatil (VOC) est collectée.

4. Procédé selon une des revendications précédentes, **caractérisé en ce que** les données de mesure sont transmises à un récepteur de données de mesure après le transport.

5. Procédé de surveillance de la qualité de l'air à l'intérieur d'un avion (1), en particulier selon une des revendications précédentes, selon lequel au moins une grandeur de mesure est collectée avec un dispositif de mesure (3) pendant un vol, selon lequel des données de vol connexes qui sont associées automatiquement à la grandeur de mesure collectée sont déterminées automatiquement et que des informations géographiques sur au moins un lieu de décollage, un lieu d'arrivée et une évolution temporelle sont collectées automatiquement pour la grandeur de mesure.

6. Procédé selon la revendication 5, **caractérisé en ce que** la détermination des données de vol se fait par comparaison avec une base de données de plans de vol.

7. Procédé selon une des revendications 5 ou 6, **caractérisé en ce que** les données de vol sont transmises par l'avion (1) ou sont déterminées à partir d'informations que l'avion (1) transmet au dispositif de mesure (3).

8. Procédé selon une des revendications 5 à 7, **caractérisé en ce que** la grandeur de mesure et les données de vol ne sont pas modifiables a posteriori.

9. Procédé selon une des revendications 5 à 8, **caractérisé en ce que** les données de vol comprennent l'altitude de vol, la position de vol et/ou la vitesse de vol.

10. Dispositif (3) pour la surveillance d'au moins une condition environnante à l'intérieur d'un moyen de transport (1), comportant un dispositif de mesure pour la collecte automatique d'au moins une grandeur de mesure corrélée avec la condition environnante, un équipement pour la détermination automatique de données de transport et pour l'association automatique des données de transport à la grandeur de mesure, pour la mise en oeuvre du procédé selon une des revendications 1 à 9.

11. Dispositif (3) selon la revendication 10, **caractérisé en ce qu'**un dispositif d'enregistrement est disponible pour l'enregistrement d'une évolution temporelle de la grandeur de mesure.

12. Dispositif (3) selon la revendication 10 ou 11, **caractérisé en ce que** ce dispositif est conçu comme un appareil portable et/ou est intégré ou peut être intégré, par exemple par connexion, dans un téléphone portable ou dans une montre.

13. Dispositif (3) selon une des revendications 10 à 12, **caractérisé en ce que** le dispositif de mesure est conçu pour la détection de phosphate de tricrésyle, de phényl-naphthylamines, d'organophosphates ou d'autres composés organiques volatils (VOC).

14. Dispositif (3) selon une des revendications 10 à 13, **caractérisé en ce que** ce dispositif (3) comporte un système d'affichage pour l'affichage d'une grandeur de mesure actuelle et/ou pour l'affichage d'une grandeur de mesure cumulée et/ou pour l'affichage d'une représentation qui correspond à une grandeur de mesure définie.

15. Dispositif (3) selon une des revendications 10 à 14 pour la surveillance de la qualité de l'air à l'intérieur d'un avion (1), comportant un dispositif de mesure pour la collecte d'une grandeur de mesure corrélée avec la teneur en phosphate de tricrésyle (TCP) et/ou avec la teneur en un autre composé organique volatil (VOC), un dispositif d'enregistrement pour l'enregistrement de la grandeur de mesure et un équipement pour la détermination des données de vol et pour l'association des données de vol à la grandeur de mesure.

16. Utilisation d'un dispositif selon une des revendications 10 à 15 pour un procédé selon une des revendications 1 à 9.
